# EUROPÄISCHE PATENTSCHRIFT

(11) **EP 2 516 875 B1**
(45) Veröffentlichungstag und Bekanntmachung des Hinweises auf die Patenterteilung: **18.09.2013**
(21) Anmeldenummer: 10798754.7
(22) Anmeldetag: 15.12.2010
(51) Int. Cl.: F16D 48/02

(54) **KUPPLUNGSSYSTEM UND VERFAHREN ZUM BETREIBEN EINES KUPPLUNGSSYSTEMS**
CLUTCH SYSTEM AND METHOD FOR OPERATING A CLUTCH SYSTEM
SYSTÈME D'EMBRAYAGE ET PROCÉDÉ PERMETTANT DE FAIRE FONCTIONNER UN SYSTÈME D'EMBRAYAGE

(30) Priorität: 23.12.2009 DE 102009060182
(43) Veröffentlichungstag der Anmeldung: 31.10.2012
(73) Patentinhaber: KNORR-BREMSE Systeme für Nutzfahrzeuge GmbH, 80809 München (DE)
(72) Erfinder: NÉMETH, Huba, H-1116 Budapest (HU); KANDÁR, Tibor, H-8773 Kacorlak (HU); RIBA, Zóltan, H-1131 Budapest (HU)
(74) Vertreter: Schönmann, Kurt
(86) Internationale Anmeldenummer: PCT/EP2010/069734
(87) Internationale Veröffentlichungsnummer: WO 2011/076627

(56) Entgegenhaltungen:
- WO-A1-88/10376
- WO-A1-2005/064187
- DE-A1- 4 031 808
- DE-A1- 10 120 113
- FR-A1- 2 829 541

## Beschreibung

Die Erfindung betrifft ein Kupplungssystem zum Schließen und Unterbrechen eines Kraftflusses, mit einem druckmittelbeaufschlagbaren Kupplungsaktuator, einer ersten elektrisch betätigbaren Ventileinrichtung und einer zweiten elektrisch betätigbaren Ventileinrichtung, wobei zum Druckaufbau Druckmittel über die erste Ventileinrichtung einem Schaltraum des Kupplungsaktuators zuführbar ist und zum Druckabbau zugeführtes Druckmittel über die zweite Ventileinrichtung wieder abführbar ist, und wobei das Kupplungssystem bei einem Druck P≥P_{d} in dem Schaltraum den Kraftfluss unterbricht oder schließt, wobei Mittel vorgesehen sind, um bei einem Defekt der ersten Ventileinrichtung und der zweiten Ventileinrichtung eine nachträgliche zum Betätigen des Kupplungssystems ausreichende Druckerhöhung in dem Schaltraum zu vermeiden.

Die Erfindung betrifft weiterhin ein Verfahren zum Betreiben eines Kupplungssystems zum Schließen und Unterbrechen eines Kraftflusses, mit einem druckmittelbeaufschlagbaren Kupplungsaktuator, einer ersten elektrisch betätigbaren Ventileinrichtung und einer zweiten elektrisch betätigbaren Ventileinrichtung, wobei zum Druckaufbau Druckmittel über die erste Ventileinrichtung einem Schaltraum des Kupplungsaktuators zugeführt wird und zum Druckabbau zugeführtes Druckmittel über die zweite Ventileinrichtung wieder abgeführt wird, und wobei das Kupplungssystem bei einem Druck P≥P_{d} in dem Schaltraum den Kraftfluss unterbricht, wobei bei einem Defekt der ersten Ventileinrichtung und der zweiten Ventileinrichtung ein nachträglicher zum Betätigen des Kupplungssystems ausreichender Druckaufbau in dem Schaltraum vermieden wird.

Ein derartiges Kupplungssystem ist beispielsweise aus der DE 10 2006 035 134 A1 bekannt und in schematischer Form in Figur 2 dargestellt.

Die WO 2005/064187 A1 beschreibt ein Kupplungssystem mit einem hydraulischen Kupplungsaktuator und stromlos offenen Ventileinrichtungen, sodass bei einem Stromausfall ein unbeabsichtigter Druckaufbau an dem Kupplungsaktuator verhindert wird.

Aus der WO 88/10376 A1 ist ein Kupplungssystem bekannt, bei dem mehrere Be- und Entlüftungsventile parallel zueinander zum Be- und Entlüften eines Steuerkolbens von einem elektronischen Steuergerät variabel pulsweitenmoduliert ansteuerbar sind.

Dir FR 2 829 541 A1 beschreibt ein Kupplungssystem mit einem Kupplungsaktuator, der von stromlos offenen Ventileinrichtungen ansteuerbar ist. Zusätzlich ist aus der FR 2 829 541 A1 das Vorsehen von Notablassventilen bekannt, die ein Ablassen von Druckmedium von einer Zufuhrseite des Kupplungsaktuators ermöglichen.

Die DE 101 20 113 beschreibt ebenfalls ein Kupplungssystem, das von stromlos offenen Ventileinrichtungen ansteuerbar ist, sodass bei einem Stromausfall ein unerwünschter Druckanstieg an dem Kupplungsaktuator verhindert wird.

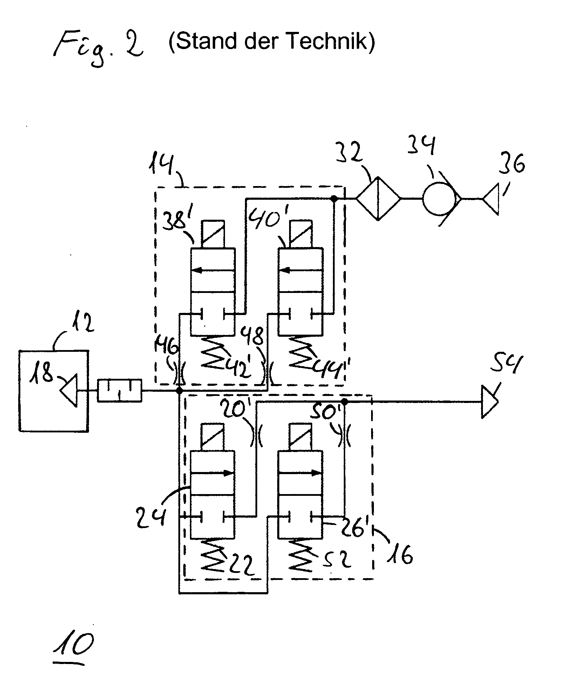

Figur 2 zeigt ein Kupplungssystem 10 mit einem einen Schaltraum 18 umfassenden Kupplungsaktuator 12, einer ersten Ventileinrichtung 14 und einer zweiten Ventileinrichtung 16, die mit einem Versorgungsanschluss 36 beziehungsweise einem Entlüftungsanschluss 54 gekoppelt sind. Die erste Ventileinrichtung 14 umfasst ein erstes Belüftungsventil 38' und ein zweites Belüftungsventil 40' welche parallel zueinander in Serie mit einer Drossel 46 beziehungsweise einer Drossel 48 angeordnet sind. Das erste Belüftungsventil 38' und das zweite Belüftungsventil 40' sind als elektrisch ansteuerbare 2/2-Wegeventile ausgeführt, die im stromlosen Zustand von einer Rückstellfeder 42' beziehungsweise einer Rückstellfeder 44' in ihre geschlossenen Schaltpositionen überführt werden. Das vorsehen parallel zueinander angeordneter Belüftungsventile 38', 40' stellt eine redundante Auslegung der ersten Ventileinrichtung 14 dar. Die Anzahl der parallel zueinander angeordneten Belüftungsventile 38', 40' ist insofern beliebig variierbar. Zwischen der ersten Ventileinrichtung 14 und dem Belüftungsanschluss 36 ist ein Filter 32 und ein Rückschlagventil 34 angeordnet. Die zweite Ventileinrichtung 16 umfasst ein erstes Entlüftungsventil 24 und ein zweites Entlüftungsventil 26', die parallel zueinander und in Serie zu einer Drossel 20' beziehungsweise 50' angeordnet sind. Das erste Entlüftungsventil 24 und das zweite Entlüftungsventil 26' sind als elektrisch ansteuerbare 2/2-Wegeventile ausgeführt, die in ihrem stromlosen Zustand von einer Rückstellfeder 22 beziehungsweise einer Rückstellfeder 52 in ihre geschlossenen Schaltpositionen überführt werden. Da die parallele Anordnung beider Entlüftungsventile 24, 26' in der zweiten Ventileinrichtung 16 ebenfalls redundant bedingt ist, ist auch ihre Anzahl, analog zu der Anzahl der in der ersten Ventileinrichtung 14 parallel zueinander angeordneten Belüftungsventile 38', 40', variierbar. Dem dargestellten Kupplungssystem 10 wird Druckmittel, zum Beispiel Druckluft oder Hydrauliköl, über den Versorgungsanschluss 36 zugeführt. Ein Rückströmen des zugeführten Druckmittels wird durch das Rückschlagventil 34 verhindert. Das zugeführte Druckmittel wird durch das Filter 32 gereinigt, um verschmutzungsbedingte Ausfälle der nachgelagerten Komponenten, insbesondere der ersten Ventileinrichtung 14 und der zweiten Ventileinrichtung 16 zu verhindern. Durch Bestromen eines oder beider Belüftungsventile 38', 40' in der ersten Ventileinrichtung 14 kann das Druckmittel in den Schaltraum 18 des Kupplungsaktuators 12 gelangen und dort einen Druckaufbau verursachen. Überschreitet der in dem Schaltraum 18 anstehende Druck P einen zum Betätigen des Kupplungssystems 10 notwendigen Schaltdruck P_{d}, so wird der Kupplungsaktuator 12 betätigt, um einen Kraftfluss zu unterbrechen oder zu schließen. Beispielsweise kann die in einem Antriebsstrang eines Kraftfahrzeugs vorgesehene Kupplung geöffnet beziehungsweise geschlossen werden, so dass eine Kraftübertragung von dem Antriebsmotor des Kraftfahrzeugs zu den Rädern des Kraftfahrzeugs hergestellt beziehungsweise unterbrochen wird. Durch Bestromen des ersten Entlüftungsventils 24 und/oder des zweiten Entlüftungsventils 26', die in

der zweiten Ventilanordnung 16 angeordnet sind, kann der in dem Schaltraum 18 herrschende Druck P durch Abführen des dort vorhandenen Druckmittels über den Entlüftungsanschluss 54 erfolgen. Das Betätigen des dargestellten Kupplungssystems 10 wird üblicherweise durch ein nicht dargestelltes Steuergerät ermöglicht, welches zum Betätigen des Kupplungsaktuators 12 entweder die erste Ventileinrichtung 14 oder die zweite Ventileinrichtung 16 ansteuern kann. Das dargestellte Kupplungssystem 10 ist so ausgelegt, dass bei einem Stromausfall der in dem Schaltraum 18 herrschende Druck P erhalten bleibt, da sowohl die erste Ventileinrichtung 14 als auch die zweite Ventileinrichtung 16 durch die Rückstellfedern 22, 42', 44', 52 in sperrende Schaltzustände überführt werden.

Dieses Verhalten des Kupplungssystems 10 ist jedoch problematisch falls bei einem entlüfteten Schaltraum 18 eine Leckage der Belüftungsventile 38', 40' während eines Defektfalls zu einem unkontrollierten Druckanstieg im Schaltraum 18 führt, der zu einer ungewollten Betätigung des Kupplungsaktuators 12 und/oder einer druckbedingten Überbelastung von Teilen der Kupplung führen könnte.

Der vorliegenden Erfindung liegt die Aufgabe zugrunde, diese Problematik zu lösen.

Erfindungsgemäß wird diese Aufgabe dadurch gelöst, dass die Mittel ein Sicherheitsventil, über das unter Umgehung der zweiten Ventileinrichtung Druckmittel von dem Schaltraum zu einem Entlüftungsanschluss abgeführt werden kann, umfassen, das bei dem Druck P≥P₁ in dem Schaltraum, wobei P₁<P_{d} ist, öffnet, und dass das Sicherheitsventil bei dem Druck P≥P₂ in dem Schaltraum, wobei P₁<P₂<P_{d} ist, wieder schließt. Durch das Vorsehen des Sicherheitsventils ist ein Druckabbau in dem Schaltraum unter Umgehung der zweiten Ventileinrichtung möglich. Der Druckabbau kann dabei ab einem einstellbaren Druckniveau P₁ dem Öffnungsdruck des druckgesteuerten Sicherheitsventils erfolgen, wobei die Druckabbaurate so gewählt werden kann, dass ein Druckaufbau über den Öffnungsdruck P₁ des Sicherheitsventils durch das Öffnen der ersten Ventileinrichtung möglich ist. Die Druckaufbaurate der geöffneten ersten Ventileinrichtung ist dementsprechend betragsmäßig größer als die Druckabbaurate des geöffneten Sicherheitsventils, um ein normales Betätigen des Kupplungssystems außerhalb des Defektfalls zu ermöglichen. Auf diese Weise kann im Defektfall, insbesondere beim Verlust der Schaltkontrolle über die zweite Ventileinrichtung durch einen Stromausfall, ein schleichender Druckaufbau durch kleine Leckagen an den Belüftungsventilen in der ersten Ventileinrichtung verhindert werden. Wenn das verwendete Sicherheitsventil bei einem Druckniveau P₂>P₁ wieder schließt, das heißt, dass das Sicherheitsventil nur für Drücke zwischen P₁ und P₂ seinen geöffneten Schaltzustand einnimmt, kann sichergestellt werden, dass das Kupplungssystem im Defektfall diejenige Schaltstellung beibehält, die es beim Eintreten des Defektfalls hatte, da ein im Schaltraum bereits anstehender Betätigungsdruck P≥P_{d} erhalten bleibt. Ein ungewolltes Betätigen und eine druckbedingte Überbelastung des Kupplungssystems kann durch diese Maßname vermieden werden. Konkrete technische Umsetzungen sind beispielhaft im Folgenden beschrieben.

Vorteilhafterweise kann vorgesehen sein, dass das Sicherheitsventil in einer Gehäusewand des Schaltraums angeordnet ist. Die Anordnung des Sicherheitsventils in der Gehäusewand des Schaltraums erlaubt eine einfache und platzsparende Montage des Sicherheitsventils, wobei insbesondere keine vollständigen Neukonstruktionen bisher verwendeter Ventileinrichtungen zur Integration der erfindungsgemäßen Funktionalität notwendig sind.

Weiterhin kann vorgesehen sein, dass die Mittel eine Drossel umfassen, die in der zweiten Ventileinrichtung angeordnet ist und deren Querschnitt so ausgelegt ist, dass bei vergleichbaren Schaltzuständen ein pro Zeiteinheit erfolgter Druckabbau über die zweite Ventileinrichtung größer ist, als ein pro Zeiteinheit über die erste Ventileinrichtung erfolgter Druckaufbau. Als vergleichbare Schaltzustände werden insbesondere alle Schaltzustände betrachtet, bei denen die gleiche Anzahl von Entlüftungsventilen und Belüftungsventilen gleichzeitig geschlossen beziehungsweise geöffnet sind. Auf diese Weise kann ein unkontrollierbarer Druckanstieg in dem Schaltraum sicher unterbunden werden, solang das in Serie zu der Drossel in der zweiten Ventileinrichtung vorgesehene Ventil in seine geöffnete Schaltposition überführt werden kann. Insbesondere kann auf diese Weise ein notfallmäßiger Betrieb des Kupplungssystems sichergestellt werden, wenn ein Schalten der ersten Ventileinrichtung nicht möglich ist und diese, zum Beispiel durch ein Verklemmen beziehungsweise durch einen mechanischen Defekt, in ihrer geöffneten Schaltstellung bleibt. Weiterhin ist zugleich ein Leckagestrom der ersten Ventileinrichtung, das heißt der Druckmittelstrom, der trotz geschlossener Schaltposition durch die erste Ventileinrichtung hindurchströmt, kleiner als ein weiterer Leckagestrom der zweiten Ventileinrichtung.

Insbesondere kann vorgesehen sein, dass die Mittel eine Rückstellfeder umfassen, die in der ersten Ventileinrichtung angeordnet ist und die so ausgelegt ist, dass ein Leckagestrom der ersten Ventileinrichtung kleiner ist, als ein weiterer Leckagestrom der zweiten Ventileinrichtung. Beispielsweise kann der Leckagestrom der ersten Ventileinrichtung durch die Verwendung einer härteren Rückstellfeder, die eine höhere Federkraft auf einen Schaltkolben des verwendeten Belüftungsventils ausübt, reduziert werden. Bei bis auf die verwendeten Rückstellfedern identischen Ventilen in der ersten Ventileinrichtung und in der zweiten Ventileinrichtung kann dementsprechend durch das Vorsehen einer gegenüber den in der zweiten Ventileinrichtung verwendeten Rückstellfedern härteren Rückstellfeder in der ersten Ventileinrichtung der Leckagestrom der ersten Ventileinrichtung auf einen Wert reduziert werden, der kleiner als der Leckagestrom der zweiten Ventileinrichtung ist. Dies verhindert einen schleichenden Druckaufbau in dem Schaltraum, da der über die erste Ventileinrichtung zuströmende Leckagenstrom auch bei geschlossener zweiten Ventileinrichtung als Leckagenstrom der zweiten Ventileinrichtung vollständig abströmen kann. Bei einem Verlust der Schaltkontrolle über die Ventileinrichtungen wird somit ein "Volllaufen" des Schaltraumes sicher verhindert.

Nützlicherweise kann auch vorgesehen sein, dass die Mittel ein elektrisch schaltbares Entlüftungsventil umfassen, das in der zweiten Ventileinrichtung angeordnet ist und das im stromlosen Zustand offen ist. Auf diese Weise kann im Defektfall, das heißt insbesondere bei einem Stromausfall, bei dem die erste Ventileinrichtung und die zweite Ventileinrichtung nicht länger schaltbar sind und in ihre mechanisch vorgegebene Ruheschaltstellungen überführt werden, ein schleichender Druckaufbau in dem Schaltraum durch eine Leckage in der ersten Ventileinrichtung, die eigentlich ihre geschlossene Schaltstellung einnehmen sollte, verhindert werden.

Das gattungsgemäße Verfahren wird erfindungsgemäß dadurch weiterentwickelt, dass ein Sicherheitsventil, über das unter Umgehung der zweiten Ventileinrichtung Druckmittel von dem Schaltraum zu einem Entlüftungsanschluss abgeführt werden kann, bei dem Druck P≥P₁ in dem Schaltraum, wobei P₁<P_{d} ist, geöffnet wird, und dass das Sicherheitsventil bei dem Druck P≥P₂ in dem Schaltraum, wobei P₁<P₂<P_{d} ist, wieder geschlossen wird. Auf diese Weise werden die Vorteile und Besonderheiten des erfindungsgemäßen Kupplungssystems auch im Rahmen eines Verfahrens umgesetzt. Dies gilt auch für die nachfolgend besonders bevorzugten Ausführungsformen des erfindungsgemäßen Verfahrens.

Vorteilhafterweise kann vorgesehen sein, dass bei vergleichbaren Schaltzuständen über die zweite Ventileinrichtung pro Zeiteinheit mehr Druckmittel abgeführt wird als über die erste Ventileinrichtung pro Zeiteinheit zugeführt wird.

Weiterhin kann vorgesehen sein, dass durch die erste Ventileinrichtung ein Leckagestrom verursacht wird, der von einem durch die zweite Ventileinrichtung verursachten weiteren Leckagestrom zumindest kompensiert wird.

Nützlicherweise kann vorgesehen sein, dass die zweite Ventileinrichtung ein elektrisch schaltbares Ventil umfasst, das im stromlosen Zustand in seine offene Schaltstellung geschaltet wird.

Die Erfindung wird nun mit Bezug auf die begleitenden Zeichnungen anhand besonders bevorzugter Ausführungsformen beispielhaft erläutert.

Es zeigen:
- Figur 1: eine erste Ausführungsform eines erfindungsgemäßen Kupplungs-systems;
- Figur 2: ein Kupplungssystem gemäß dem Stand der Technik;
- Figur 3: eine zweite Ausführungsform eines erfindungsgemäßen Kupplungs-systems;
- Figur 4: ein Sicherheitsventil in einer ersten Schaltposition;
- Figur 5: das Sicherheitsventil aus Figur 4 in einer zweiten Schaltposition und
- Figur 6: das Sicherheitsventil aus Figur 4 in einer dritten Schaltposition.

In den folgenden Zeichnungen bezeichnen gleiche Bezugszeichen gleiche oder gleichartige Teile.

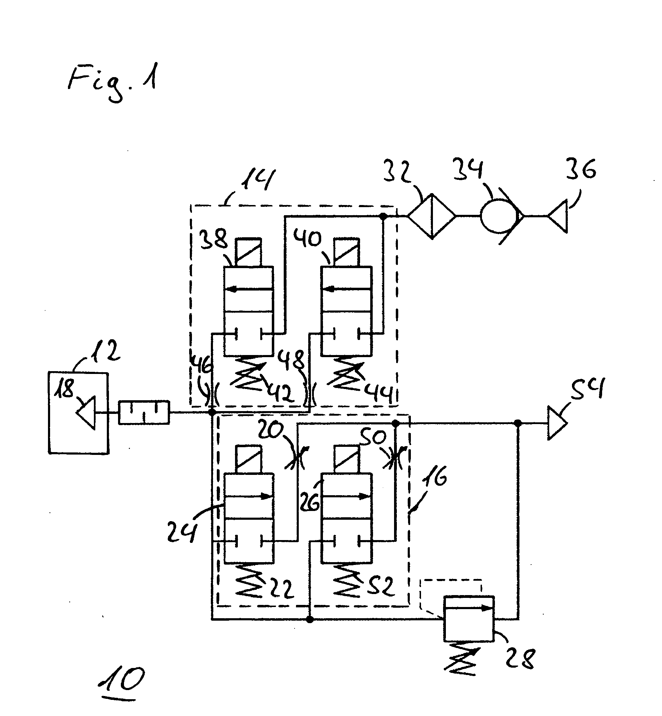

Figur 1 zeigt eine erste Ausführungsform eines erfindungsgemäßen Kupplungssystems 10. Neben den bereits im Zusammenhang mit Figur 2 beschriebenen Komponenten ist ein Sicherheitsventil 28 vorgesehen, über das unter Umgehung der zweiten Ventileinrichtung 16 Druckmittel von dem Schaltraum 18 zu dem Entlüftungsanschluss 54 abgeführt werden kann. Die Kopplung des Sicherheitsventils 28 mit dem Entlüftungsanschluss 54 ist symbolisch zu verstehen, und das Sicherheitsventil 28 kann insbesondere einen eigenen Entlüftungsanschluss aufweisen und insbesondere, falls als Druckmittel Druckluft verwendet wird, diese direkt in die Umgebung ablassen. Falls ein anderes Druckmittel verwendet wird, zum Beispiel Hydrauliköl, entspricht der Entlüftungsanschluss 54 üblicherweise einer Rückflussleitung, die das verwendete Druckmittel in ein nicht dargestelltes Reservoir eines geschlossenen Druckmittelkreislaufs zurückführt. Gegenüber dem aus der Figur 2 bereits bekannten Kupplungssystem 10 weist die erste Ventileinrichtung 14 modifizierte Belüftungsventile 38, 40 auf, die angepasste Rückstellfedern 42, 44 umfassen. Die durch die Rückstellfedern 42, 44 aufgebrachten Federkräfte sind üblicherweise etwas größer, das heißt die verwendeten Rückstellfedern 42, 44 sind etwas härter, um bei der ersten Ventileinrichtung 14 auftretende Leckageströme auf einen Wert zu reduzieren, der geringer ist, als der durch die zweite Ventileinrichtung 16 verursachte Leckagestrom. Als Leckagestrom wird dabei der trotz einer geschlossenen Schaltstellung einer Ventileinrichtung auftretende Druckmittelfluss durch die Ventileinrichtung definiert. Das Grundprinzip der Leckagenreduktion wird insbesondere bei der Verwendung ansonsten baugleicher Ventile 38, 40, 24, 26 in der ersten und der zweiten Ventileinrichtung 14, 16 verständlich, da dann bei einer härteren Rückstellfeder 42, 44 durch den höheren Anpressdruck eines vorhandenen Schaltkolbens auf den zugehörigen Ventilsitz der Leckagestrom reduzierbar ist. Die Federkraft der Rückstellfedern 42, 44 ist nur wenig gegenüber den aus der Figur 2 bekannten Rückstellfedern 42', 44' modifiziert, um die Schalteigenschaften der Belüftungsventile 38, 40 nicht nachhaltig zu beeinflussen. Die Anpassung der Federkraft kann wahlweise nur in einem oder in beiden Belüftungsventilen erfolgen.

Weiterhin sind in der Figur 1 Drosseln 20, 50 in der zweiten Ventileinrichtung 16 vorgesehen, deren Querschnitte so ausgelegt sind, dass ein Druckabbau über die zweite Ventileinrichtung 16 schneller erfolgen kann als ein Druckaufbau über die erste Ventileinrichtung 14. Dies kann sowohl bei geöffneter erster Ventileinrichtung 14 und geöffneter zweiter Ventileinrichtung 16 als auch bei geschlossener erster Ventileinrichtung 14 und geschlossener zweiter Ventileinrichtung 16 zutreffen. Ist sowohl die erste Ventileinrichtung 14 als auch die zweite Ventileinrichtung 16 geschlossen, so bedeutet dies, dass der durch die erste Ventileinrichtung 14 zuströmende Leckagestrom geringer ist als der durch die zweite Ventileinrichtung 16 mögliche abströmende Leckagestrom, so dass ein Druckaufbau in dem Schaltraum 18 vermieden wird. Falls sowohl die erste Ventileinrichtung 14 als auch die zweite Ventileinrichtung 16 in ihren geöffneten Schaltstellungen sind, bedeutet dies, dass ein Druckaufbau in dem Schaltraum 18 ebenfalls nicht möglich ist, was für den Fall eines Defekts nur der ersten Ventileinrichtung 14 zum Beispiel durch ein Klemmen der Belüftungsventile 38, 40 oder durch einen sonstigen mechanischen Defekt, der die Dichtigkeit der ersten Ventileinrichtung 14 zerstört, einen Notbetrieb durch das alleinige Schalten der zweiten Ventileinrichtung 16 ermöglicht. Die Anpassung des Drosselquerschnitts kann wahlweise nur in einer oder in beiden Drosseln 20, 50 erfolgen, wobei nur eine geringe Anpassung vorgesehen ist, um die Druckabbauraten nicht zu stark zu beeinflussen, da das Auswirkungen auf die Schalteigenschaften des Kupplungssystems 10 hätte.

Figur 2 zeigt ein Kupplungsschaltsystem gemäß dem Stand der Technik, das bereits in der Einleitung beschrieben wurde.

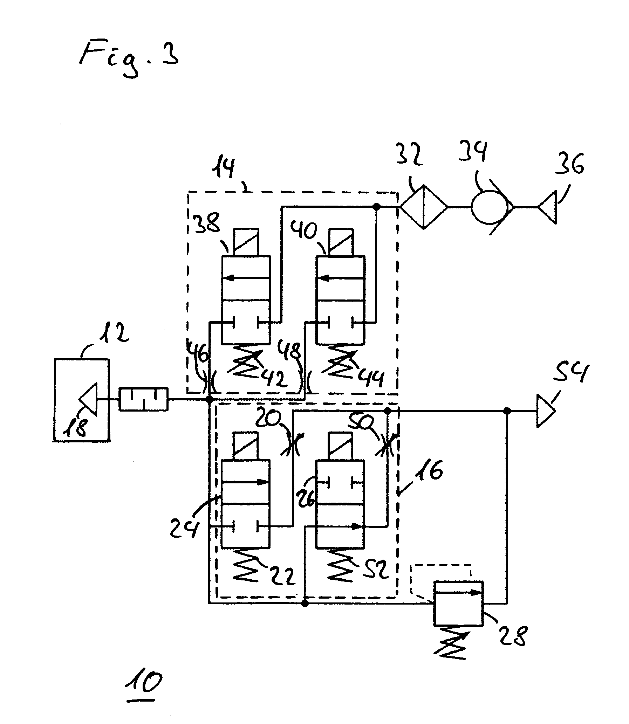

Figur 3 zeigt eine zweite Ausführungsform eines erfindungsgemäßen Kupplungssystems. Im Unterschied zu der aus Figur 1 bekannten ersten Ausführungsform umfasst die in Figur 3 dargestellte zweite Ausführungsform ein zweites Entlüftungsventil 26, das in seiner stromlosen Ruhestellung nicht geschlossen sondern geöffnet ist. Im Falle eines Defektes, insbesondere eines Stromausfalles, ist dementsprechend die erste Ventileinrichtung 14 in ihrer geschlossenen Schaltstellung, während die zweite Ventileinrichtung 16 zumindest über ein zweites Entlüftungsventil 26 verfügt, über das ein schneller Druckabbau möglich ist, so dass ein Druckaufbau in dem Schaltraum 18 des Kupplungsaktuators 12 durch einen Leckagenstrom der ersten Ventileinrichtung 14 nicht möglich ist.

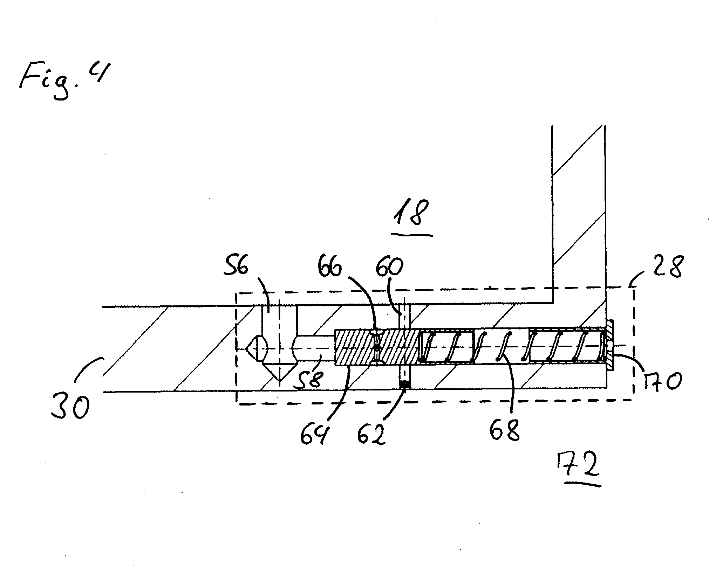

Figuren 4, 5 und 6 zeigen ein Sicherheitsventil in drei unterschiedlichen Schaltstellungen. Das in Figur 4 dargestellte Sicherheitsventil 28 ist in einer Gehäusewand 30 angeordnet, die den Schaltraum 18 von einer Umgebung 72 dicht trennt. Die Gehäusewand 30 kann auch die übrigen nicht dargestellten Ventileinrichtungen des Kupplungssystems umschließen. Die Mechanik des Sicherheitsventils 28 ist in einer zweiten Bohrung 58 angeordnet, die mit einer ersten Bohrung 56 teilweise überlappt. Die erste Bohrung 56 ist von dem Schaltraum 18 aus zugänglich, während die zweite Bohrung 58 von der Umgebung 72 aus zugänglich ist. Weiterhin ist ein Entlüftungskanal 60 vorgesehen, der den Schaltraum 18 durch die Gehäusewand 30 mit der Umgebung 72 verbindet, wobei der Entlüftungskanal 60 vorzugsweise mittig durch die zweite Bohrung 58 hindurchtritt. Im Inneren der zweiten Bohrung 58 ist ein Steuerkolben 64 beweglich angeordnet, der von einer Feder 68, die sich gegen eine Verschlusskappe 70 abstützt, in seiner dargestellten Ruheposition gehalten wird. Der Steuerkolben 64 weist eine Entlüftungsbohrung 66 auf, die durch axiales Verschieben des Steuerkolbens 64 in der zweiten Bohrung 58 mit dem Entlüftungskanal 60 zur Deckung gebracht werden kann. In seiner dargestellten ersten Schaltstellung verschließt der Steuerkolben 64 des Sicherheitsventils 28 den Entlüftungskanal 60 dicht, so dass der Schaltraum 18 dicht von der Umgebung 72 getrennt ist. In dem Entlüftungskanal 60 ist eine Drossel 62 angeordnet, über die die Druckabbaurate des geöffneten Sicherheitsventils 28 einstellbar ist. Die Verschlusskappe 70 erlaubt einen einfachen Zugriff auf das Sicherheitsventil 28 zu Wartungszwecken. Die Verschlusskappe 70 ist vorzugsweise lösbar in oder an der Seitenbohrung 58 befestigt, beispielsweise als eine Schraube, insbesondere eine Hohlschraube, oder als eine hohle Einsteckhülse, deren Durchmesser größer als der Durchmesser der zweiten Bohrung 58 ist, so dass die Verschlusskappe 70 durch eine Klemmwirkung gehalten wird. Die Verschlusskappe 70 kann eine Öffnung zur Umgebung 72 aufweisen, um auch über den Umgebungsdruck eine Rückstellkraft auf dem Steuerkolben 64 auszuüben.

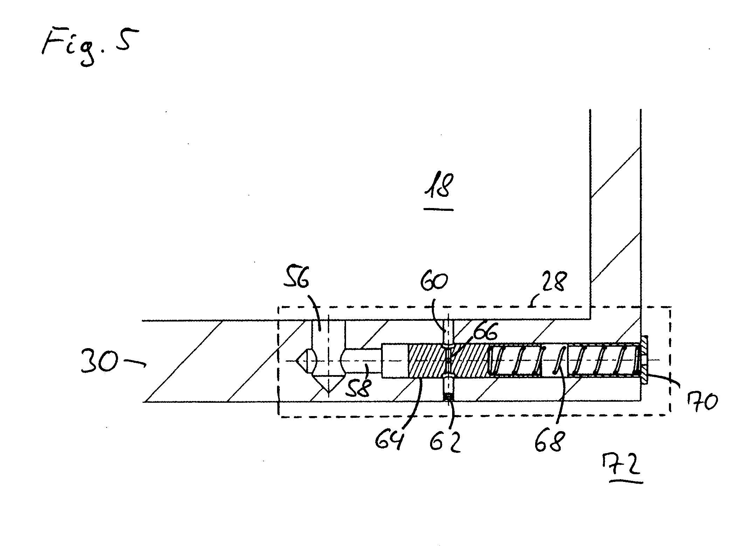

Bei der in Figur 4 dargestellten ersten Schaltposition des Sicherheitsventils 28 ist der in dem Schaltraum 18 herrschende Druck P kleiner als ein zum Betätigen des Sicherheitsventils 28 notwendiger erster Schaltdruck P₁. Der in dem Schaltraum 18 herrschende Druck P wirkt über die erste Bohrung 56 und die zweite Bohrung 58 auf eine Steuerfläche des Schaltkolbens 64 gegen die durch die Feder 68 aufgebrachte Schließkraft. Steigt der Druck P in dem Steuerraum 18 an, so wächst die auf die Steuerfläche des Steuerkolbens 64 ausgeübte Kraft und der Steuerkolben 64 wird entgegen der durch die Feder 68 aufgebrachten Kraft in der Figur nach rechts bewegt. Entspricht der Druck P in dem Schaltraum 18 dem ersten Schaltdruck P₁, so gibt die in dem Steuerkolben 64 angeordnete Entlüftungsbohrung 66 den Entlüftungskanal 60 frei, so dass ein Druckabbau aus dem Steuerraum 18 in die Umgebung 72 erfolgen kann. Diese zweite Schaltposition ist in Figur 5 dargestellt. In Folge des Druckabbaus sinkt die auf die Steuerfläche des Steuerkolbens ausgeübte Kraft wieder, bis der Druck P in dem Steuerraum 18 erneut kleiner als der erste Schaltdruck P₁ ist. Falls der Leckagestrom der ersten Ventileinrichtung 14 der über die Drossel 62 möglichen Druckabbaurate entspricht, bleibt das Sicherheitsventil 28 dauerhaft in der dargestellten zweiten Schaltposition.

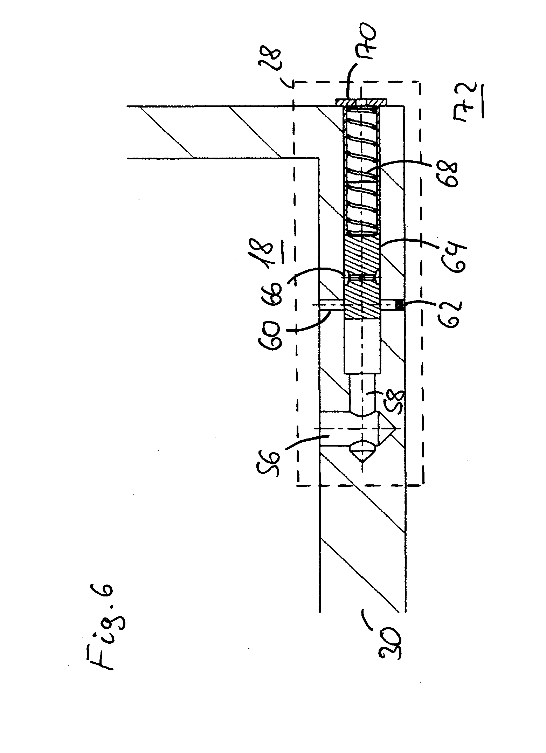

Steigt der Druck P in dem Schaltraum 18 schneller an, als ein Druckabbau über den Entlüftungskanal 60 erfolgen kann, wobei die Druckabbaurate durch die Drossel 62 einstellbar ist, wird der Schaltkolben 64 durch den nun vorliegenden höheren Druck P weiter in der Zeichnung nach rechts verschoben, bis bei einem Druck P größer als einem zweiten Schaltdruck P₂ der Schaltkolben 64 erneut den Entlüftungskanal verdeckt. In diesem dritten Schaltzustand, der in Figur 6 dargestellt ist, ist das Sicherheitsventil 28 wieder geschlossen. Das in den Figuren 4 bis 6 dargestellte Sicherheitsventil 28 ist dementsprechend nur für Drücke P, die zwischen einem ersten Schaltdruck P₁ und einem zweiten Schaltdruck P₂ liegen, in einer geöffneten Schaltstellung. Vorzugsweise ist der zweite Schaltdruck P₂ kleiner als ein zum Betätigen des Kupplungsaktuators notwendiger Schaltdruck P_{d}.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Kupplungssystem
- 12: Kupplungsaktuator
- 14: erste Ventileinrichtung
- 16: zweite Ventileinrichtung
- 18: Schaltraum
- 20: Drossel
- 20': Drossel
- 22: Rückstellfeder
- 24: erstes Entlüftungsventil
- 26: zweites Entlüftungsventil
- 26': zweites Entlüftungsventil
- 28: Sicherheitsventil
- 30: Gehäusewand
- 32: Filter
- 34: Rückschlagventil
- 36: Versorgungsanschluss
- 38: erstes Belüftungsventil
- 38': erstes Belüftungsventil
- 40: zweites Belüftungsventil
- 40': zweites Belüftungsventil
- 42: Rückstellfeder
- 42': Rückstellfeder
- 44: Rückstellfeder
- 44': Rückstellfeder
- 46: Drossel
- 48: Drossel
- 50: Drossel
- 50': Drossel
- 52: Rückstellfeder
- 54: Entlüftungsanschluss
- 56: erste Bohrung
- 58: zweite Bohrung
- 60: Entlüftungskanal
- 62: Drossel
- 64: Steuerkolben
- 66: Entlüftungsbohrung
- 68: Feder
- 70: Verschlusskappe
- 72: Umgebung

## Patentansprüche

1. Kupplungssystem (10) zum Schließen und Unterbrechen eines Kraftflusses, mit einem druckmittelbeaufschlagbaren Kupplungsaktuator (12), einer ersten elektrisch betätigbaren Ventileinrichtung (14) und einer zweiten elektrisch betätigbaren Ventileinrichtung (16), wobei zum Druckaufbau Druckmittel über die erste Ventileinrichtung (14) einem Schaltraum (18) des Kupplungsaktuators (12) zuführbar ist und zum Druckabbau zugeführtes Druckmittel über die zweite Ventileinrichtung (16) wieder abführbar ist, und wobei das Kupplungssystem (10) bei einem Druck P≥P_{d} in dem Schaltraum (18) den Kraftfluss unterbricht oder schließt, wobei Mittel vorgesehen sind, um bei einem Defekt der ersten Ventileinrichtung (14) und der zweiten Ventileinrichtung (16) eine nachträgliche zum Betätigen des Kupplungssystems (10) ausreichende Druckerhöhung in dem Schaltraum (18) zu vermeiden, **dadurch gekennzeichnet, dass** die Mittel ein Sicherheitsventil (28), über das unter Umgehung der zweiten Ventileinrichtung (16) Druckmittel von dem Schaltraum (18) zu einem Entlüftungsanschluss (54) abgeführt werden kann, umfassen, das bei dem Druck P≥P₁ in dem Schaltraum, wobei P₁<P_{d} ist, öffnet, und dass das Sicherheitsventil (28) bei dem Druck P≥P₂ in dem Schaltraum, wobei P₁<P₂<P_{d} ist, wieder schließt.

2. Kupplungssystem (10) nach Anspruch 1, **dadurch gekennzeichnet, dass** das Sicherheitsventil (28) in einer Gehäusewand (30) des Schaltraums (18) angeordnet ist.

3. Kupplungssystem (10) nach einem der vorhergehenden Ansprüche, **dadurch gekennzeichnet, dass** die Mittel eine Drossel (20, 50) umfassen, die in der zweiten Ventileinrichtung (16) angeordnet ist und deren Querschnitt so ausgelegt ist, dass bei Schaltzuständen, bei denen die gleiche Anzahl von Entlüftungsventilen und Belüftungsventilen gleichzeitig geschlossen beziehungsweise geöffnet sind, ein pro Zeiteinheit erfolgter Druckabbau über die zweite Ventileinrichtung (16) größer ist, als ein pro Zeiteinheit über die erste Ventileinrichtung (14) erfolgter Druckaufbau.

4. Kupplungssystem (10) nach einem der vorhergehenden Ansprüche, **dadurch gekennzeichnet, dass** die Mittel eine Rückstellfeder (42, 44) umfassen, die in der ersten Ventileinrichtung (14) angeordnet ist und die so ausgelegt ist, dass ein Leckagestrom der ersten Ventileinrichtung (14) kleiner ist, als ein weiterer Leckagestrom der zweiten Ventileinrichtung (16).

5. Kupplungssystem (10) nach einem der vorhergehenden Ansprüche, **dadurch gekennzeichnet, dass** die Mittel ein elektrisch schaltbares Entlüftungsventil (26) umfassen, das in der zweiten Ventileinrichtung (16) angeordnet ist und das im stromlosen Zustand offen ist.

6. Verfahren zum Betreiben eines Kupplungssystems (10) zum Schließen und Unterbrechen eines Kraftflusses, mit einem druckmittelbeaufschlagbaren Kupplungsaktuator (12), einer ersten elektrisch betätigbaren Ventileinrichtung (14) und einer zweiten elektrisch betätigbaren Ventileinrichtung (16), wobei zum Druckaufbau Druckmittel über die erste Ventileinrichtung (14) einem Schaltraum (18) des Kupplungsaktuators (12) zugeführt wird und zum Druckabbau zugeführtes Druckmittel über die zweite Ventileinrichtung (16) wieder abgeführt wird, und wobei das Kupplungssystem (10) bei einem Druck P≥P_{d} in dem Schaltraum (18) den Kraftfluss unterbricht oder schließt, wobei bei einem Defekt der ersten Ventileinrichtung (14) und der zweiten Ventileinrichtung (16) ein nachträglicher zum Betätigen des Kupplungssystems (10) ausreichender Druckaufbau in dem Schaltraum (18) vermieden wird, **dadurch gekennzeichnet, dass** ein Sicherheitsventil (28), über das unter Umgehung der zweiten Ventileinrichtung (16) Druckmittel von dem Schaltraum (18) zu einem Entlüftungsanschluss (54) abgeführt werden kann, bei dem Druck P≥P₁ in dem Schaltraum, wobei P₁<P_{d} ist, geöffnet wird, und dass das Sicherheitsventil (28) bei dem Druck P≥P₂ in dem Schaltraum, wobei P₁<P₂<P_{d} ist, wieder geschlossen wird.

7. Verfahren nach Anspruch 6, **dadurch gekennzeichnet, dass** bei Schaltzuständen, bei denen die gleiche Anzahl von Entlüftungsventilen und Belüftungsventilen gleichzeitig geschlossen beziehungsweise geöffnet sind, über die zweite Ventileinrichtung (16) pro Zeiteinheit mehr Druckmittel abgeführt wird als über die erste Ventileinrichtung (14) pro Zeiteinheit zugeführt wird.

8. Verfahren nach Anspruch 6 oder 7, **dadurch gekennzeichnet, dass** durch die erste Ventileinrichtung (14) ein Leckagestrom verursacht wird, der von einem durch die zweite Ventileinrichtung (16) verursachten weiteren Leckagestrom zumindest kompensiert wird.

9. Verfahren nach einem der Ansprüche 6 bis 8, **dadurch gekennzeichnet, dass** die zweite Ventileinrichtung (16) ein elektrisch schaltbares Ventil (26) umfasst, das im stromlosen Zustand in seine offene Schaltstellung geschaltet wird.

## Claims

1. A clutch system (10) for closing and interrupting a force flow, having a clutch actuator (12) to which pressure medium can be applied, a first electrically actuatable valve device (14), and a second electrically actuatable valve device (16), wherein pressure medium can be supplied via the first valve device (14) to a switching chamber (18) of the clutch actuator (12) to build up pressure and supplied pressure medium can be discharged again via the second valve device (16) to release pressure, and wherein the clutch system (10) interrupts or closes the force flow at a pressure P ≥ P_{d} in the switching chamber (18), wherein means are provided, in order, in the event of a defect of the first valve device (14) and the second valve device (16), to avoid a subsequent pressure increase in the switching chamber (18) which is sufficient to actuate the clutch system (10), **characterized in that** the means comprise a safety valve (28), via which pressure medium can be discharged from the switching chamber (18) to the deaeration connection (54) while bypassing the second valve device (16), which opens at the pressure P ≥ P₁ in the switching chamber, wherein P₁ < P_{d}, and **in that** the safety valve (28) closes again at the pressure P ≥ P₂ in the switching chamber, wherein P₁ < P₂ < P_{d}.

2. The clutch system (10) according to Claim 1, **characterized in that** the safety valve (28) is arranged in a housing wall (30) of the switching chamber (18).

3. The clutch system (10) according to one of the preceding claims, **characterized in that** the means comprise a throttle (20, 50), which is arranged in the second valve device (16) and whose cross section is designed so that in the case of switching states, in which the same number of deaeration valves and aeration valves are simultaneously closed or open, respectively, a release of pressure occurring per unit of time via the second valve device (16) is greater than a buildup of pressure occurring per unit of time via the first valve device (14).

4. The clutch system (10) according to one of the preceding claims, **characterized in that** the means comprise a restoring spring (42, 44), which is arranged in the first valve device (14) and is designed so that a leakage flow of the first valve device (14) is less than a further leakage flow of the second valve device (16).

5. The clutch system (10) according to one of the preceding claims, **characterized in that** the means comprise an electrically switchable deaeration valve (26), which is arranged in the second valve device (16) and is open in the deenergized state.

6. A method for operating a clutch system (10) for closing and interrupting a force flow, having a clutch actuator (12) to which pressure medium can be applied, a first electrically actuatable valve device (14), and a second electrically actuatable valve device (16), wherein pressure medium is supplied via the first valve device (14) to a switching chamber (18) of the clutch actuator (12) to build up pressure and supplied pressure medium is discharged again via the second valve device (16) to release pressure, and wherein the clutch system (10) interrupts or closes the force flow at a pressure P ≥ P_{d} in the switching chamber (18), wherein, in the event of a defect of the first valve device (14) and the second valve device (16), a subsequent buildup of pressure in the switching chamber (18) which is sufficient to actuate the clutch system (10) is avoided, **characterized in that** a safety valve (28), via which pressure medium can be discharged from the switching chamber (18) to the deaeration connection (54) while bypassing the second valve device (16), is opened at the pressure P ≥ P₁ in the switching chamber, wherein P₁ < P_{d}, and **in that** the safety valve (28) is closed again at the pressure P ≥ P₂, wherein P₁ < P₂ < P_{d} in the switching chamber.

7. The method according to one of Claim 6, **characterized in that**, in the case of switching states, in which the same number of deaeration valves and aeration valves are simultaneously closed or open, respectively, more pressure medium is discharged per unit of time via the second valve device (16) than is supplied per unit of time via the first valve device (14).

8. The method according to Claim 6 or 7, **characterized in that** a leakage flow is caused by the first valve device (14) which is at least compensated for by a further leakage flow caused by the second valve device (16).

9. The method according to one of Claims 6 to 8, **characterized in that** the second valve device (16) comprises an electrically switchable valve (26), which is switched into its open switching position in the deenergized state.

## Revendications

1. Système d'embrayage (10) à fermer et interrompre un flux de force, comprenant un actionneur d'embrayage (12) apte à être chargé par un fluide sous pression, un premier moyen à soupape à commande électrique (14) et un deuxième moye à soupape à commande électrique (16), dans lequel on peut alimenter du fluide sous pression via ledit premier moyen à soupape (14) à une chambre de commutation (18) dudit actionneur d'embrayage (12) pour la mise sous pression et on peut évacuer du fluide sous pression alimenté via ledit deuxième moyen à soupape (16) pour la réduction de la pression, audit système d'embrayage (10) interrompant ou fermant le flux de force à un niveau de pression P≥P_{d} dans ladite chambre de commutation (18), aux moyens étant disposés à éviter une augmentation ultérieure de la pression dans ladite chambre de commutation (18), qui suffit pour la commande du système d'embrayage (10), au cas d'un défaut dudit premier moyen à soupape (14) et dudit deuxième moyen á soupape (16), **caractérisé en ce que** lesdits moyens comprennent une soupape de sécurité (28), via laquelle on peut évacuer du fluide sous pression en dehors de ladite chambre de commutation (18) vers un raccord d'évacuation (54), en contournant ledit deuxième moyen à soupape (16), cette soupape ouvrant à un niveau de pression P≥P₁, à P₁<P_{d}, et **en ce que** ladite soupape de sécurité (28) fermant encore à un niveau de pression P≥P₂, à P₁<P₂<P_{d}, dans ladite chambre de commutation.

2. Système d'embrayage (10) selon la revendication 1, **caractérisé en ce que** ladite soupape de sécurité (28) est disposée dans une paroi du boitier (30) de ladite chambre de commutation (18).

3. Système d'embrayage (10) selon une quelconque des revendications précédentes, **caractérisé en ce que** lesdits moyens comprennent un étrangleur (20, 50) disposé dans ledit deuxième moyen à soupape (16) et ayant une section transversale conçue de façon, qu'aux conditions de commutation, sous lesquelles le même nombre de soupapes d'évacuation et de soupapes de ventilation sont fermés ou respectivement ouverts en même temps, une réduction de pression réalisée par unité de temps via ledit deuxième moyen à soupape (16) est plus grande qu'une augmentation de pression réalisée par unité de temps via ledit premier moyen à soupape (14).

4. Système d'embrayage (10) selon une quelconque des revendications précédentes, **caractérisé en ce que** lesdits moyens comprennent un ressort de rappel (42, 44), qui est disposé dans ledit premier moyen à soupape (14) et qui est conçu d'une telle façon, qu'un courant de fuite dudit premier moyen à soupape (14) est plus petit qu'un autre courant de fuite dudit deuxième moyen à soupape (16).

5. Système d'embrayage (10) selon une quelconque des revendications précédentes 1 à 5, **caractérisé en ce que** lesdits moyens comprennent une soupape d'évacuation (26) apte à être commandé par voie électrique, qui est disposé dans ledit deuxième moyen à soupape (16) et qui est ouvert en état hors tension.

6. Procédé à opérer un système d'embrayage (10) à fermer et interrompre un flux de force, comprenant un actionneur d'embrayage (12) apte à être chargé par un fluide sous pression, un premier moyen à soupape à commande électrique (14) et un deuxième moye à soupape à commande électrique (16), dans lequel du fluide sous pression est alimenté via ledit premier moyen à soupape (14) à une chambre de commutation (18) dudit actionneur d'embrayage (12) pour la mise sous pression et du fluide sous pression alimenté est évacué via ledit deuxième moyen à soupape (16) pour la réduction de la pression, audit système d'embrayage (10) interrompant ou fermant le flux de force à un niveau de pression P≥P_{d} dans ladite chambre de commutation_(18), aux moyens étant disposés à éviter une augmentation ultérieure de la pression dans ladite chambre de commutation (18), qui suffit pour la commande du système d'embrayage (10), au cas d'un défaut dudit premier moyen à soupape (14) et dudit deuxième moyen á soupape (16), **caractérisé en ce qu'**une soupape de sécurité (28), via laquelle on peut évacuer du fluide sous pression en dehors de ladite chambre de commutation (18) vers un raccord d'évacuation (54), en contournant ledit deuxième moyen à soupape (16), s'ouvre à un niveau de pression P≥P₁, à P₁<P_{d}, et **en ce que** ladite soupape de sécurité (28) se ferme encore à un niveau de pression P≥P₂, à P₁<P₂<P_{d}, dans ladite chambre de commutation.

7. Procédé selon la revendication 6, **caractérisé en ce qu'**aux conditions de commutation, sous lesquelles le même nombre de soupapes d'évacuation et de soupapes de ventilation sont fermés ou respectivement ouverts en même temps, une quantité du fluide sous pression est évacué par unité de temps via ledit deuxième moyen à soupape (16), qui est plus grande que la quantité de fluide sous pression alimenté per unité de temps via ledit premier moyen à soupape (14).

8. Procédé selon la revendication 6 ou 7, **caractérisé en ce que** ledit premier moyen à soupape (14) donne lieu à un courant de fuite, qui est compensé au moins par un autre courant de fuite causé par ledit deuxième moyen à soupape (16).

9. Procédé selon une quelconque des revendications 6 à 8, **caractérisé en ce que** ledit deuxième moyen à soupape (16) comprend une soupape (26) à commande électrique, qui, en état hors tension, est commutée dans sa position de commutation ouverte.
